# EUROPÄISCHE PATENTSCHRIFT

(11) **EP 3 717 276 B1**
(45) Veröffentlichungstag und Bekanntmachung des Hinweises auf die Patenterteilung: **24.11.2021**
(21) Anmeldenummer: 18765843.0
(22) Anmeldetag: 04.09.2018
(51) Int. Cl.: B60C 1/00, C08L 9/06

(54) **SCHWEFELVERNETZBARE KAUTSCHUKMISCHUNG, VULKANISAT DER KAUTSCHUKMISCHUNG UND FAHRZEUGREIFEN**
SULFUR-CROSSLINKABLE RUBBER MIXTURE, VULCANIZATE OF THE RUBBER MIXTURE, AND VEHICLE TYRE
MÉLANGE DE CAOUTCHOUC RÉTICULABLE AU SOUFRE, VULCANISAT DE CE MÉLANGE DE CAOUTCHOUC ET PNEU DE VÉHICULE

(30) Priorität: 28.11.2017 DE 102017221232
(43) Veröffentlichungstag der Anmeldung: 07.10.2020
(73) Patentinhaber: Continental Reifen Deutschland GmbH, 30165 Hannover (DE)
(72) Erfinder: SCHÖFFEL, Julia, 30419 Hannover (DE); MÜLLER, Norbert, 30419 Hannover (DE); RECKER, Carla, 30419 Hannover (DE); WEBER, Christine, 30419 Hannover (DE); TARANTOLA, Gesa, 30419 Hannover (DE); DAUER, David-Raphael, 30419 Hannover (DE); SCHAX, Fabian, 30419 Hannover (DE); HOJDIS, Nils Walter, 30419 Hannover (DE)
(74) Vertreter: Continental Corporation
(86) Internationale Anmeldenummer: PCT/EP2018/073664
(87) Internationale Veröffentlichungsnummer: WO 2019/105614

(56) Entgegenhaltungen:
- EP-A1- 0 748 839
- DE-A1-102010 037 323
- US-A1- 2013 030 111
- DATABASE WPI Week 201241 Thomson Scientific, London, GB; AN 2012-G69088 XP002786619, & JP 2012 111838 A (SHIKOKU KASEI KOGYO KK) 14. Juni 2012 (2012-06-14)
- DATABASE WPI Week 200507 Thomson Scientific, London, GB; AN 2005-060509 XP002786620, & JP 2004 322337 A (FUJI PHOTO FILM CO LTD) 18. November 2004 (2004-11-18)

## Beschreibung

Die Erfindung betrifft eine schwefelvernetzbare Kautschukmischung, deren Vulkanisat und einen Fahrzeugreifen.

Die Kautschukzusammensetzung des Laufstreifens bestimmt in hohem Maße die Fahreigenschaften eines Fahrzeugreifens, insbesondere eines Fahrzeugluftreifens.

Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Es bestehen Zielkonflikte zwischen den meisten der bekannten Reifeneigenschaften wie Nassgriffverhalten, Trockenbremsen, Handling-Verhalten, Rollwiderstand, Wintereigenschaften, Abriebverhalten und Reißeigenschaften.

Insbesondere bei Fahrzeugluftreifen wurden vielfältige Versuche unternommen, die Eigenschaften des Reifens durch die Variation der Polymerkomponenten, der Füllstoffe und der sonstigen Zuschlagstoffe vor allem in der Laufstreifenmischung positiv zu beeinflussen.

Dabei muss man berücksichtigen, dass eine Verbesserung in der einen Reifeneigenschaft oft eine Verschlechterung einer anderen Eigenschaft mit sich bringt.

In einem gegebenen Mischungssystem existieren zum Beispiel verschiedene, bekannte Möglichkeiten das Handling-Verhalten zu optimieren, in dem die Steifigkeit der Kautschukmischung erhöht wird. Zu erwähnen sind hier z.B. eine Erhöhung des Füllgrades und die Erhöhung der Netzknotendichte der vulkanisierten Kautschukmischung. Während ein erhöhter Füllstoffanteil Nachteile im Rollwiderstand mit sich bringt, führt die Anhebung des Netzwerkes zu einer Verschlechterung in den Reißeigenschaften sowie der Nassgriffindikatoren der Kautschukmischung.

Es ist außerdem bekannt, dass Kautschukmischungen, insbesondere für den Laufstreifen von Fahrzeugluftreifen, Kieselsäure als Füllstoff enthalten können. Zudem ist bekannt, dass sich Vorteile hinsichtlich des Rollwiderstandsverhaltens und der Prozessierbarkeit der Kautschukmischung ergeben, wenn die Kieselsäure mittels Silan-Kupplungsagenzien an das oder die Polymer(e) angebunden ist.

Im Stand der Technik bekannte Silan-Kupplungsagenzien gehen beispielsweise aus der DE 2536674 C3 und der DE 2255577 C3 hervor.

Prinzipiell kann unterschieden werden zwischen Silanen, die nur an Kieselsäure oder vergleichbare Füllstoffe anbinden und hierzu insbesondere wenigstens eine Silyl-Gruppe aufweisen, und Silanen, die zusätzlich zu einer Silyl-Gruppe eine reaktive Schwefel-Gruppierung, wie insbesondere eine Sₓ-Gruppierung (mit x > oder gleich 2) oder eine Mercapto-Gruppe S-H oder geblockte S-SG-Gruppierung aufweisen, wobei SG für Schutzgruppe steht, sodass das Silan durch Reaktion der Sₓ- oder S-H-Gruppierung oder der S-SG-Gruppierung nach Entfernen der Schutzgruppe bei der Schwefelvulkanisation auch an Polymere anbinden kann.

Im Stand der Technik sind zudem teilweise Kombinationen von ausgewählten Silanen offenbart.

Die EP 1085045 B1 offenbart eine Kautschukmischung enthaltend eine Kombination aus einem polysulfidischen Silan (Gemisch mit 69 bis 79 Gew.-% Disulfidanteil, 21 bis 31 Gew.-% Trisulfidanteil und 0 bis 8 Gew.-% Tetrasulfidanteil) und einem Silan, welches nur ein Schwefelatom aufweist und daher nicht an Polymere anbinden kann. Mit einem derartigen Silangemisch wird in Kombination mit Ruß und Kieselsäure als Füllstoff ein optimiertes Eigenschaftsbild hinsichtlich der Laborprediktoren für u. a. Rollwiderstand und Abrieb und beim Einsatz im Laufstreifen von Fahrzeugreifen optimale Reifeneigenschaften erzielt.

Die WO 2012092062 offenbart eine Kombination aus einem geblockten Mercaptosilan (NXT) mit füllstoffverstärkenden Silanen, welche zwischen den Silylgruppen nichtreaktive Alkylgruppen aufweisen.

Der vorliegenden Erfindung liegt nun die Aufgabe zugrunde, eine Kautschukmischung bereitzustellen, die im Vergleich zum Stand der Technik eine Verbesserung im Eigenschaftsprofil, insbesondere der Steifigkeit, Härte und der Rollwiderstandsindikatoren, aufweist. Hierdurch soll die Kautschukmischung, insbesondere für die Anwendung in Fahrzeugreifen, ein verbessertes Handling-Verhalten bei geringerem Wärmeaufbau aufweisen. Gleichzeitig sollen die übrigen Eigenschaften, insbesondere für die Anwendung in Fahrzeugreifen, auf einem vergleichbaren und akzeptablen Niveau bleiben.

Gelöst wird diese Aufgabe durch eine Kautschukmischung, die die folgenden Bestandteile enthält:
- wenigstens einen Dienkautschuk; und
- 10 bis 300 phr wenigstens einer Kieselsäure ; und
- 1 bis 30 phf wenigstens eines Silans A mit der allgemeinen Summenformel A-I)

   A-I) (R¹)ₒSi-R²-(S-R³)_{q}-S-X; und
- 0,5 bis 30 phf wenigstens eines Silans B mit der allgemeinen Summenformel B-I)

   B-I) (R¹)ₒSi-R²-(S-R³)ᵤ-S-R²-Si(R¹)ₒ
wobei o gleich 1 oder 2 oder 3 sein kann und die Reste R¹ gleich oder verschieden voneinander sein können und ausgewählt sind aus C₁-C₁₀-Alkoxygruppen, C₆-C₂₀-Phenoxygruppen, C₂-C₁₀-cyclischen Dialkoxygruppen, C₂-C₁₀- Dialkoxygruppen, C₄-C₁₀- Cycloalkoxygruppen, C₆-C₂₀- Arylgruppen, C₁-C₁₀-Alkylgruppen, C₂-C₂₀- Alkenylgruppen, C₂-C₂₀- Alkinylgruppen, C₇-C₂₀- Aralkylgruppen, Halogeniden oder
Alkylpolyethergruppe ―O-(R⁶-O)ᵣ-R⁷, wobei die Reste R⁶ gleich oder verschieden sind und verzweigte oder unverzweigte, gesättigte oder ungesättigte, aliphatische, aromatische oder gemischt aliphatische/aromatische zweibindige C₁-C₃₀-Kohlenwasserstoffgruppe sind, r eine ganze Zahl von 1 bis 30 ist und die Reste R⁷ unsubstituierte oder substituierte, verzweigte oder unverzweigte einbindige Alkyl-, Alkenyl-, Aryl- oder Aralkylgruppen sind, oder
zwei R¹ entsprechen einer Dialkoxygruppe mit 2 bis 10 Kohlenstoffatomen wobei dann o < 3 ist,
oder es können zwei oder mehr Silane gemäß den Formeln A-I) und/oder B-I) über Reste R¹ oder durch Kondensation verbrückt sein; und
wobei die Bedingung gilt, dass in den Formeln A-I) und B-I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist; und
wobei die Reste R² und R³ in jedem Molekül und innerhalb eines Moleküls gleich oder verschieden sein können und verzweigte oder unverzweigte, gesättigte oder ungesättigte, aliphatische, aromatische oder gemischt aliphatische/aromatische zweibindige C₁-C₃₀-Kohlenwasserstoffgruppen sind; und wobei q gleich 1 oder 2 oder 3 ist; und u gleich 1 oder 2 oder 3 ist; und X ein Wasserstoffatom oder eine ―C(=O)-R⁸ Gruppe ist wobei R⁸ ausgewählt ist aus Wasserstoff, C₁-C₂₀ Alkylgruppen, vorzugsweise C₁-C₁₇, C₆-C₂₀-Arylgruppen, vorzugsweise Phenyl, C₂-C₂₀-Alkenylgruppen und C₇-C₂₀-Aralkylgruppen.

Überraschenderweise hat sich herausgestellt, dass mit der Kombination der Silane A und B, wobei Silan A aufgrund der reaktiven S-X-Gruppe auch an Polymere anbinden kann, eine Verbesserung der erfindungsgemäßen Kautschukmischung hinsichtlich der Indikatoren für Handling und Wärmeaufbau bzw. Rollwiderstand.

Ein weiterer Gegenstand der vorliegenden Erfindung ist ein Vulkanisat wenigstens einer erfindungsgemäßen Kautschukmischung.

Ein weiterer Gegenstand der vorliegenden Erfindung ist ein Fahrzeugreifen, der wenigstens ein erfindungsgemäßes Vulkanisat der erfindungsgemäßen Kautschukmischung in wenigstens einem Bauteil aufweist. Bevorzugt weist der Fahrzeugreifen das wenigstens eine Vulkanisat zumindest im Laufstreifen auf.

Das erfindungsgemäße Vulkanisat und der erfindungsgemäßen Fahrzeugreifen zeichnen sich durch optimierte Handling-Prediktoren und einen verbesserten Rollwiderstand aus.

Bei zweigeteilten Laufstreifen (oberer Teil: Cap und unterer Teil: Base) kann die erfindungsgemäße Kautschukmischung sowohl für die Cap als auch für die Base verwendet werden. Bevorzugt weist wenigstens die Cap oder wenigstens die Base oder wenigstens die Cap und die Base wenigstens ein erfindungsgemäßes Vulkanisat der erfindungsgemäßen Kautschukmischung auf.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die erfindungsgemäße Kautschukmischung ist ferner auch für andere Bauteile von Fahrzeugreifen geeignet, wie z. B. insbesondere dem Hornprofil, sowie für innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für das erfindungsgemäße Vulkanisat und den erfindungsgemäßen Fahrzeugreifen, der wenigstens ein erfindungsgemäßes Vulkanisat der erfindungsgemäßen Kautschukmischung in wenigstens in einem Bauteil aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht M_{w} gemäß GPC von größer als 20000 g/mol.

Die in dieser Schrift verwendete Angabe phf (parts per hundred parts of filler by weight) ist dabei die in der Kautschukindustrie gebräuchliche Mengenangabe für Kupplungsagenzien für Füllstoffe.

Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Erfindungsgemäß ist die Kautschukmischung schwefelvernetzbar und enthält hierzu wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei bevorzugt ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Die Kautschukmischung ist insbesondere für Fahrzeugreifen geeignet, wobei sie prinzipiell in jedem Bauteil verwendet werden kann, wie insbesondere dem Laufstreifen, der Seitenwand, dem Hornprofil, sowie in sonstigen sogenannten Body-Bauteilen.

Vorzugsweise ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk.

Gemäß einer besonders bevorzugten Ausführungsform der Erfindung ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Eine derartige Kautschukmischung ist insbesondere für den Laufstreifen von Fahrzeugreifen geeignet.

Gemäß einer besonders vorteilhaften Ausführungsform der Erfindung enthält die Kautschukmischung wenigstens ein natürliches Polyisopren und zwar bevorzugt in Mengen von 2 bis 100 phr, und gemäß einer besonders vorteilhaften Ausführungsform der Erfindung 5 bis 30 phr, ganz besonders bevorzugt 5 bis 15 phr. Hiermit wird eine besonders gute Prozessierbarkeit der erfindungsgemäßen Kautschukmischung erzielt.

Gemäß einer besonders vorteilhaften Ausführungsform der Erfindung enthält die Kautschukmischung wenigstens ein Polybutadien (Butadienkautschuk) und zwar bevorzugt in Mengen von 2 bis 100 phr, und gemäß einer besonders vorteilhaften Ausführungsform der Erfindung 5 bis 50 phr, ganz besonders bevorzugt 10 bis 25 phr. Hiermit werden besonders gute Abrieb- und Reißeigenschaften und eine gute Prozessierbarkeit bei geringem Hystereseverlust der erfindungsgemäßen Kautschukmischung erzielt.

Gemäß einer besonders vorteilhaften Ausführungsform der Erfindung enthält die Kautschukmischung wenigstens ein Styrol-Butadien-Kautschuk (SBR) und zwar bevorzugt in Mengen von 2 bis 100 phr, und gemäß einer besonders vorteilhaften Ausführungsform der Erfindung 25 bis 80 phr, ganz besonders bevorzugt 65 bis 85 phr. Hiermit wird eine gute Prozessierbarkeit bei geringem Hystereseverlust sowie guten Abrieb- und Reißeigenschaften der erfindungsgemäßen Kautschukmischung erzielt.

Bevorzugt ist der SBR hierbei ein SSBR, womit sich optimierte Hysterese-Eigenschaften ergeben.

Gemäß einer besonders vorteilhaften Ausführungsform der Erfindung enthält die Kautschukmischung ein Polymerblend aus den genannten Kautschuken NR, BR und SBR, bevorzugt SSBR, und zwar bevorzugt in den jeweils genannten Mengen in sämtlichen denkbaren Kombinationen, wobei die Summe aller enthaltenen Kautschuke 100 phr ergibt. Eine besonders vorteilhafte Ausführungsform besteht darin, dass die Kautschukmischung 5 bis 30 phr wenigstens eines natürlichen und/oder wenigstens eines synthetischen Polyisoprens und 25 bis 80 phr wenigstens eines Styrol-Butadien-Kautschuks und 5 bis 50 phr wenigstens eines Butadien-Kautschuks enthält.

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem eis-1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches eis-1,4 Polyisopren, bei welchem der cis-1,4-Anteil im Naturkautschuk größer 99 Gew.-% ist.

Ferner ist auch ein Gemisch eines oder mehrerer natürlicher Polyisoprene mit einem oder mehreren synthetischen Polyisopren(en) denkbar.

Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Erfindungsgemäß enthält die Kautschukmischung 10 bis 300 phr wenigstens einer Kieselsäure.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 85 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 80 bis 300 m²/g und ganz besonders bevorzugt von 110 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z. B. Zeosil® 1165 MP der Firma Solvay), zum Einsatz kommen.

Die erfindungsgemäße Kautschukmischung enthält gemäß einer bevorzugten Ausführungsform der Erfindung 20 bis 300 phr, bevorzugt 30 bis 250 phr, besonders bevorzugt 30 bis 150 phr und ganz besonders bevorzugt 80 bis 110 phr wenigstens einer Kieselsäure.

Insbesondere mit einer vergleichsweise hohen Kieselsäuremenge von bis zu 300 phr oder 250 phr oder 150 phr oder 110 phr ergeben sich in Kombination mit den beiden genannten und unten näher erläuterten Silanen A und B besonders vorteilhafte Eigenschaften hinsichtlich der Reifeneigenschaften der Kautschukmischung und ihrer Vulkanisate, insbesondere optimierte Handling- und Rollwiderstands-Prediktoren.

Für den Fall, dass wenigstens zwei verschiedene Kieselsäuren, die sich z. B. durch ihre BET-Oberfläche unterscheiden, in der erfindungsgemäßem Kautschukmischung enthalten sind, beziehen sich die genannten Mengenangaben immer auf die Gesamtmenge aller enthaltenen Kieselsäuren.

Die Begriffe "Kieselsäure" und "Silika" werden im Rahmen der vorliegenden Erfindung synonym verwendet.

Die erfindungsgemäße Kautschukmischung kann ferner wenigstens einen Ruß, insbesondere einen Industrieruß enthalten.

Als Ruße kommen alle der fachkundigen Person bekannten Rußtypen in Frage.

In einer Ausführungsform hat der Ruß eine Jodzahl, gemäß ASTM D 1510, die auch als Jodadsorptionszahl bezeichnet wird, zwischen 30 und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100g, besonders bevorzugt 90 bis 200 ml/100g.

Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Rußtyps in der Kautschukmischung, insbesondere für Fahrzeugreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Rußtyp in der jeweiligen Kautschukmischung verwendet wird, es können aber auch verschiedene Rußtypen in die Kautschukmischung eingemischt werden. Die Gesamtmenge an enthaltenen Rußen beträgt bevorzugt 0 bis 250 phr.

Gemäß einer vorteilhaften Ausführungsform der Erfindung enthält die Kautschukmischung 0 bis 20 phr, bevorzugt 0 bis 10 phr wenigstens eines Rußes und 30 bis 300 phr, bevorzugt 30 bis 200 phr wenigstens einer Kieselsäure.

Gemäß einer weiteren vorteilhaften Ausführungsform der Erfindung enthält die Kautschukmischung 30 bis 150 phr wenigstens eines Rußes und 10 bis 30 phr wenigstens einer Kieselsäure und stellt damit eine Teil-Silika-Mischung dar.

Die erfindungsgemäße Kautschukmischung kann, bevorzugt möglichst geringe Mengen d.h. bevorzugt 0 bis 20 phr, besonders bevorzugt 0 bis 10 phr, weitere Füllstoffe enthalten. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filier".

Zinkoxid gehört im Rahmen der vorliegenden Erfindung nicht zu den Füllstoffen.

Erfindungsgemäß enthält die Kautschukmischung 1 bis 30 phf, bevorzugt 2 bis 20 phf, besonders bevorzugt 2 bis 10 phf, wenigstens eines Silans A mit der allgemeinen Summenformel A-I)

A-I) (R¹)ₒSi-R²-(S-R³)_{q}-S-X;

und 0,5 bis 30 phf, bevorzugt 0,5 bis 20 phf, besonders bevorzugt 1 bis 10 phf, wenigstens eines Silans B mit der allgemeinen Summenformel B-I)

B-I) (R¹)ₒSi-R²-(S-R³)ᵤ-S-R²-Si(R¹)ₒ,

wobei o gleich 1, 2 oder 3 sein kann und die Reste R¹ gleich oder verschieden voneinander sein können und ausgewählt sind aus C₁-C₁₀-Alkoxygruppen,
C₆-C₂₀-Phenoxygruppen, C₂-C₁₀-cyclischen Dialkoxygruppen, C₂-C₁₀- Dialkoxygruppen, C₄-C₁₀- Cycloalkoxygruppen, C₆-C₂₀- Arylgruppen,
C₁-C₁₀-Alkylgruppen, C₂-C₂₀- Alkenylgruppen, C₂-C₂₀- Alkinylgruppen,
C₇-C₂₀- Aralkylgruppen, Halogeniden oder
Alkylpolyethergruppe ―O-(R⁶-O)ᵣ-R⁷, wobei die Reste R⁶ gleich oder verschieden sind und verzweigte oder unverzweigte, gesättigte oder ungesättigte, aliphatische, aromatische oder gemischt aliphatische/aromatische zweibindige C₁-C₃₀-Kohlenwasserstoffgruppe sind, r eine ganze Zahl von 1 bis 30 ist und die Reste R⁷ unsubstituierte oder substituierte, verzweigte oder unverzweigte einbindige Alkyl-, Alkenyl-, Aryl- oder Aralkylgruppen sind, oder
zwei R¹ entsprechen einer Dialkoxygruppe mit 2 bis 10 Kohlenstoffatomen wobei dann o < 3 (o kleiner drei) ist,
oder es können zwei oder mehr Silane gemäß den Formeln A-I) und/oder B-I) über Reste R¹ oder durch Kondensation verbrückt sein; und
wobei die Bedingung gilt, dass in den Formeln A-I) und B-I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist; und
wobei die Reste R² und R³ in jedem Molekül und innerhalb eines Moleküls gleich oder verschieden sein können und verzweigte oder unverzweigte, gesättigte oder ungesättigte, aliphatische, aromatische oder gemischt aliphatische/aromatische zweibindige C₁-C₃₀-Kohlenwasserstoffgruppen sind; und wobei
q gleich 1 oder 2 oder 3 ist; und u gleich 1 oder 2 oder 3 ist; und X ein Wasserstoffatom oder eine ―C(=O)-R⁸ Gruppe ist wobei R⁸ ausgewählt ist aus Wasserstoff, C₁-C₂₀ Alkylgruppen, vorzugsweise C₁-C₁₇, C₆-C₂₀-Arylgruppen, vorzugsweise Phenyl, C₂-C₂₀-Alkenylgruppen und C₇-C₂₀-Aralkylgruppen.

Das erfindungsgemäß enthaltene Silan A ist durch die S-X-Gruppierung ein Silan, welches durch Abspalten von X, also des Wasserstoffatoms oder der ―C(=O)-R⁸ Gruppe, an Polymere anbinden kann.

Es können auch verschiedene Silane mit verschiedenen Gruppen X im Gemisch vorliegen. X ist ein Wasserstoffatom oder eine ―C(=O)-R⁸ Gruppe, wobei R⁸ ausgewählt ist aus Wasserstoff, C₁-C₂₀ Alkylgruppen, vorzugsweise C₁-C₁₇,
C₆-C₂₀-Arylgruppen, vorzugsweise Phenyl,
C₂-C₂₀-Alkenylgruppen und C₇-C₂₀-Aralkylgruppen.

Bevorzugt ist X eine ―C(=O)-R⁸ Gruppe, wobei R⁸ besonders bevorzugt eine C₁-C₂₀ Alkylgruppe ist; X ist hierbei somit eine Alkanoylgruppe.

Gemäß einer vorteilhaften Ausführungsform weist die Alkanoylgruppe insgesamt 1 bis 3 Kohlenstoffatome, insbesondere 2 Kohlenstoffatome auf.

Gemäß einer weiteren vorteilhaften Ausführungsform weist die Alkanoylgruppe insgesamt 7 bis 9 Kohlenstoffatome, insbesondere 8 Kohlenstoffatome auf.

Gemäß einer weiteren vorteilhaften Ausführungsform weist die Alkanoylgruppe insgesamt 17 bis 19 Kohlenstoffatome, insbesondere 18 Kohlenstoffatome auf.

Der Index q kann die Werte 1 oder 2 oder 3 annehmen. Bevorzugt ist q gleich 1.

Das erfindungsgemäß enthaltene Silan B weist einzelne Schwefelatome auf, die nicht an die Polymerketten des Dienkautschuks anbinden können, da die chemische Bindung -C-S-C- sich während der Vulkanisation üblicherweise nicht öffnet.

Der Index u kann die Werte 1 oder 2 oder 3 annehmen. Bevorzugt ist u gleich 1.

Die folgenden Ausführungen bezüglich R¹, R² und R³ gelten für die Silane gemäß den Formeln A-I) und B-I), soweit nichts anderes angegeben ist.

R² bzw. R³ können insbesondere und bevorzugt -CH₂-, -CH₂CH₂-, -CH₂CH₂CH₂-, -CH₂CH₂CH₂CH₂-, -CH(CH₃)-, -CH₂CH(CH₃)-, -CH(CH₃)CH₂-, -C(CH₃)₂-, -CH(C₂H₅)-, -CH₂CH₂CH(CH₃)-, -CH(CH₃)CH₂CH₂-, -CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂CH₂CH₂- oder 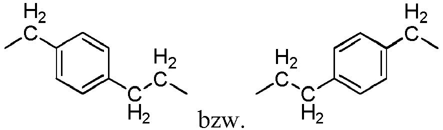 sein. Bevorzugt ist R² eine Alkylgruppe mit 2 oder 3 Kohlenstoffatomen und dabei bevorzugt -CH₂CH₂- oder -CH₂CH₂CH₂-, besonders bevorzugt -CH₂CH₂CH₂-. Bevorzugt ist R³ eine Alkylgruppe mit 4 bis 8 Kohlenstoffatomen und dabei bevorzugt -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, besonders bevorzugt -CH₂CH₂CH₂CH₂CH₂CH₂-.

Sämtliche genannten Reste R¹ und Verbrückungen von einem oder mehreren Silanen über Reste R¹ können innerhalb einer Silyl-Gruppe miteinander kombiniert sein.

Für den Fall, dass zwei R¹ einer Dialkoxygruppe mit 2 bis 10 Kohlenstoffatomen entsprechen und dann o < 3 (o kleiner drei) ist, ist das Siliziumatom Teil eines Ringsystems.

Für den Fall, dass zwei Silane gemäß Formel A-I) und/oder B-I) mit einander verbrückt sind, teilen sie sich einen Rest R¹ oder sind durch Kombination zweier Si-R¹-Gruppen miteinander über ein Sauerstoffatom verknüpft. Auf diese Weise können auch mehr als zwei Silane aneinander verknüpft sein. Im Anschluss an die Synthese des Silans gemäß Formel A-I) und/oder B-I) ist es somit denkbar, dass zwei Silane gemäß Formel A-I) und/oder B-I) über ein Sauerstoffatom oder über die Reste R¹ miteinander verbrückt werden. Auf diese Weise können auch mehr als zwei Silane aneinander verknüpft werden, wie beispielsweise über Dialkoxygruppen.

Die erfindungsgemäße Kautschukmischung kann somit auch Oligomere, die durch Hydrolyse und Kondensation oder durch Verbrücken mittels Dialkoxygruppen als R¹ der Silane A und/oder Silane B (Silane der Formel A-I) und/oder B-I)) entstehen, enthalten.

Die Silane gemäß den Formeln A-I) und B-I) umfassen durch die Bedingung, dass in den Formeln A-I) und B-I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist, jeweils wenigstens einen Rest R¹, der als Abgangsgruppe dienen kann.

Insbesondere sind dies somit Alkoxy-Gruppen, Phenoxy-Gruppen oder sämtliche andere der genannten Gruppen, die mit einem Sauerstoffatom an das Siliziumatom gebunden sind, oder Halogenide.

Es ist bevorzugt, dass die Reste R¹ Alkylgruppen mit 1 bis 6 Kohlenstoffatomen oder Alkoxygruppen mit 1 bis 6 Kohlenstoffatomen oder Halogenide umfassen, besonders bevorzugt sind Alkoxygruppen mit 1 bis 6 Kohlenstoffatomen.

Gemäß einer besonders vorteilhaften Ausführungsform der Erfindung sind die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, wobei o gleich 3 ist.

Aber auch bei Oligomeren oder im Fall, dass zwei R¹ eine Dialkoxy-Gruppe bilden, sind die übrigen Reste R¹ bevorzugt Alkylgruppen mit 1 bis 6 Kohlenstoffatomen oder Halogenide oder Alkoxygruppen mit 1 bis 6 Kohlenstoffatomen, bevorzugt 1 oder 2 Kohlenstoffatomen, also Methoxygruppen oder Ethoxygruppen, ganz besonders bevorzugt Ethoxygruppen.

Im Rahmen der vorliegenden Erfindung werden Ethoxygruppen in den Formeln der Silane mit EtO bzw. OEt abgekürzt dargestellt. Die beiden Schreibweisen verdeutlichen, dass Alkoxygruppen, wie Ethoxygruppen, über das Sauerstoffatom O an das Siliziumatom Si gebunden sind.

Prinzipiell können die Abkürzungen OEt und EtO aber im Rahmen der vorliegenden Erfindung synonym verwendet werden.

Silane A der Formel A-I) können bevorzugt sein:
(EtO)₃Si-(CH₂)₃-S-(CH₂)-S-C(=O)-CH₃, (EtO)₃Si-(CH₂)₃-S-(CH₂)-S-C(=O)-C₂H₅, (EtO)₃Si-(CH₂)₃-S-(CH₂)-S-C(=O)-C₃H₇, (EtO)₃Si-(CH₂)₃-S-(CH₂)-S-C(=O)-C₄H₉, (EtO)₃Si-(CH₂)₃-S-(CH₂)-S-C(=O)-C₅H₁₁, (EtO)₃Si-(CH₂)₃-S-(CH₂)-S-C(=O)-C₆H₁₃, (EtO)₃Si-(CH₂)₃-S-(CH₂)-S-C(=O)-C₇H₁₅, (EtO)₃Si-(CH₂)₃-S-(CH₂)-S-C(=O)-C₉H₁₉, (EtO)₃Si-(CH₂)₃-S-(CH₂)-S-C(=O)-C₁₁H₂₃, (EtO)₃Si-(CH₂)₃-S-(CH₂)-S-C(=O)-C₁₃H₂₇, (EtO)₃Si-(CH₂)₃-S-(CH₂)-S-C(=O)-C₁₅H₃₁, (EtO)₃Si-(CH₂)₃-S-(CH₂)-S-C(=O)-C₁₇H₃₅, (EtO)₃Si-(CH₂)₃-S-(CH₂)₂-S-C(=O)-CH₃, (EtO)₃Si-(CH₂)₃-S-(CH₂)₂-S-C(=O)-C₂H₅, (EtO)₃Si-(CH₂)₃-S-(CH₂)₂-S-C(=O)-C₃H₇, (EtO)₃Si-(CH₂)₃-S-(CH₂)₂-S-C(=O)-C₄H₉, (EtO)₃Si-(CH₂)₃-S-(CH₂)₂-S-C(=O)-C₅Hₙ, (EtO)₃Si-(CH₂)₃-S-(CH₂)₂-S-C(=O)-C₆H₁₃, (EtO)₃Si-(CH₂)₃-S-(CH₂)₂-S-C(=O)-C₇H₁₅, (EtO)₃Si-(CH₂)₃-S-(CH₂)₂-S-C(=O)-C₉H₁₉, (EtO)₃Si-(CH₂)₃-S-(CH₂)₂-S-C(=O)-C₁₁H₂₃, (EtO)₃Si-(CH₂)₃-S-(CH₂)₂-S-C(=O)-C₁₃H₂₇, (EtO)₃Si-(CH₂)₃-S-(CH₂)₂-S-C(=O)-C₁₅H₃₁, (EtO)₃Si-(CH₂)₃-S-(CH₂)₂-S-C(=O)-C₁₇H₃₅, (EtO)₃Si-(CH₂)₃-S-(CH₂)₃-S-C(=O)-CH₃, (EtO)₃Si-(CH₂)₃-S-(CH₂)₃-S-C(=O)-C₂H₅, (EtO)₃Si-(CH₂)₃-S-(CH₂)₃-S-C(=O)-C₃H₇, (EtO)₃Si-(CH₂)₃-S-(CH₂)₃-S-C(=O)-C₄H₉, (EtO)₃Si-(CH₂)₃-S-(CH₂)₃-S-C(=O)-C₅H₁₁, (EtO)₃Si-(CH₂)₃-S-(CH₂)₃-S-C(=O)-C₆H₁₃, (EtO)₃Si-(CH₂)₃-S-(CH₂)₃-S-C(=O)-C₇H₁₅, (EtO)₃Si-(CH₂)₃-S-(CH₂)₃-S-C(=O)-C₉H₁₉, (EtO)₃Si-(CH₂)₃-S-(CH₂)₃-S-C(=O)-C₁₁H₂₃, (EtO)₃Si-(CH₂)₃-S-(CH₂)₃-S-C(=O)-C₁₃H₂₇, (EtO)₃Si-(CH₂)₃-S-(CH₂)₃-S-C(=O)-C₁₅H₃₁, (EtO)₃Si-(CH₂)₃-S-(CH₂)₃-S-C(=O)-C₁₇H₃₅, (EtO)₃Si-(CH₂)₃-S-(CH₂)₆-S-C(=O)-CH₃, (EtO)₃Si-(CH₂)₃-S-(CH₂)₆-S-C(=O)-C₂H₅, (EtO)₃Si-(CH₂)₃-S-(CH₂)₆-S-C(=O)-C₃H₇, (EtO)₃Si-(CH₂)₃-S-(CH₂)₆-S-C(=O)-C₄H₉, (EtO)₃Si-(CH₂)₃-S-(CH₂)₆-S-C(=O)-C₅H₁₁, (EtO)₃Si-(CH₂)₃-S-(CH₂)₆-S-C(=O)-C₆H₁₃, (EtO)₃Si-(CH₂)₃-S-(CH₂)₆-S-C(=O)-C₇H₁₅, (EtO)₃Si-(CH₂)₃-S-(CH₂)₆-S-C(=O)-C₉H₁₉, (EtO)₃Si-(CH₂)₃-S-(CH₂)₆-S-C(=O)-C₁₁H₂₃, (EtO)₃Si-(CH₂)₃-S-(CH₂)₆-S-C(=O)-C₁₃H₂₇, (EtO)₃Si-(CH₂)₃-S-(CH₂)₆-S-C(=O)-C₁₅H₃₁, (EtO)₃Si-(CH₂)₃-S-(CH₂)₆-S-C(=O)-C₁₇H₃₅.

Gemäß einer bevorzugten Ausführungsform der Erfindung hat das Silan A die folgende Struktur gemäß Formel A-II):

A-II) (EtO)₃Si-(CH₂)₃-S-(CH₂)₆-S-C(=O)-CH₃ .

Gemäß einer bevorzugten Ausführungsform der Erfindung hat das Silan A die folgende Struktur gemäß Formel A-III):

A-III) (EtO)₃Si-(CH₂)₃-S-(CH₂)₆-S-C(=O)-(CH₂)₆-CH₃ .

Gemäß einer bevorzugten Ausführungsform der Erfindung hat das Silan A die folgende Struktur gemäß Formel Formel A-IV) hat:

A-IV) (EtO)₃Si-(CH₂)₃-S-(CH₂)₆-S-C(=O)-(CH₂)₁₆-CH₃.

Es ist auch denkbar, dass die erfindungsgemäße Kautschukmischung ein Gemisch zweier oder mehrerer der Silane A-II), A-III) und A-IV) enthält.

Es ist auch denkbar, dass die erfindungsgemäße Kautschukmischung ein Gemisch der Silane A-II) und/oder A-III) und/oder A-IV) mit wenigstens einem weiteren Silan der übergeordneten Formel A-I) enthält.

Die Gesamtmenge an enthaltenen Silanen A, die unter die Formel A-I) fallen, beträgt in jedem Fall 1 bis 30 phf, bevorzugt 2 bis 20 phf, besonders bevorzugt 2 bis 10 phf. Gemäß einer vorteilhaften Weiterbildung der Erfindung beträgt die Menge an enthaltenen Silanen A wenigstens 2,5 phf.

Gemäß einer weiteren vorteilhaften Weiterbildung der Erfindung beträgt die Menge an enthaltenen Silanen A wenigstens 3 phf.

Gemäß einer weiteren vorteilhaften Weiterbildung der Erfindung beträgt die Menge an enthaltenen Silanen A wenigstens 3,5 phf.

Die Mengen bevorzugten Mindestmengen gelten jeweils auch, wenn nur ein Silan des Typs A enthalten ist.

Insbesondere mit den bevorzugten und besonders bevorzugten Mengen und den genannten Weiterbildungen bzw. Ausführungsformen ergeben sich sehr gute Eigenschaften hinsichtlich Rollwiderstands- und Handling-Prediktoren.

Silane B der Formel B-I) können bevorzugt sein:
(EtO)₃Si-CH₂-S-CH₂-S-CH₂-Si(OEt)₃, (EtO)₃Si-(CH₂)₂-S-CH₂-S-(CH₂)₂-Si(OEt)₃, (EtO)₃Si-(CH₂)₃-S-CH₂-S-(CH₂)₃-Si(OEt)₃, (EtO)₃Si-CH₂-S-(CH₂)₂-S-CH₂-Si(OEt)₃, (EtO)₃Si-(CH₂)₂-S-(CH₂)₂-S-(CH₂)₂-Si(OEt)₃, (EtO)₃Si-(CH₂)₃-S-(CH₂)₂-S-(CH₂)₃-Si(OEt)₃, (EtO)₃Si-CH₂-S-(CH₂)₃-S-CH₂-Si(OEt)₃, (EtO)₃Si-(CH₂)₂-S-(CH₂)₃-S-(CH₂)₂-Si(OEt)₃, (EtO)₃Si-(CH₂)₃-S-(CH₂)₃-S-(CH₂)₃-Si(OEt)₃, (EtO)₃Si-CH₂-S-(CH₂)₄-S-CH₂-Si(OEt)₃, (EtO)₃Si-(CH₂)₂-S-(CH₂)₄-S-(CH₂)₂-Si(OEt)₃, (EtO)₃Si-(CH₂)₃-S-(CH₂)₄-S-(CH₂)₃-Si(OEt)₃, (EtO)₃Si-CH₂-S-(CH₂)₅-S-CH₂-Si(OEt)₃, (EtO)₃Si-(CH₂)₂-S-(CH₂)₅-S-(CH₂)₂-Si(OEt)₃, (EtO)₃Si-(CH₂)₃-S-(CH₂)₅-S-(CH₂)₃-Si(OEt)₃, (EtO)₃Si-CH₂-S-(CH₂)₆-S-CH₂-Si(OEt)₃, (EtO)₃Si-(CH₂)₂-S-(CH₂)₆-S-(CH₂)₂-Si(OEt)₃, (EtO)₃Si-(CH₂)₃-S-(CH₂)₆-S-(CH₂)₃-Si(OEt)₃.

Gemäß einer bevorzugten Ausführungsform der Erfindung hat das Silan B die folgende Struktur gemäß Formel B-II): 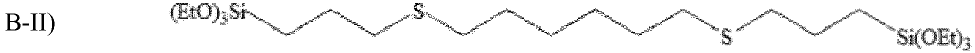 , also (EtO)₃Si-(CH₂)₃-S-(CH₂)₆-S-(CH₂)₃-Si(OEt)₃.

Insbesondere mit einem Silan gemäß Formel B-II) werden besonders optimierte Handling- und Rollwiderstands-Prediktoren erzielt.

Hierbei ist es besonders überraschend, dass die Kombination eines Silanes A gemäß Formel A-I, bevorzugt ein Silan gemäß Formel A-II) und/oder Formel A-III), mit einem Silan B gemäß Formel B-I), bevorzugt ein Silan gemäß Formel B-II), zu einem synergistischen Effekt hinsichtlich der Handling- und Rollwiderstands-Prediktoren führt.

Es ist auch denkbar, dass die erfindungsgemäße Kautschukmischung ein Gemisch zweier Silane der Formel B-I), wie z. B. B-II) mit einem weiteren Silan der Formel B-I) enthält. Die Gesamtmenge an enthaltenen Silanen B, die unter die Formel B-I) fallen, beträgt in jedem Fall 0,5 bis 30 phf, bevorzugt 0,5 bis 20 phf, besonders bevorzugt 0,5 bis 10 phf.

Gemäß einer vorteilhaften Weiterbildung der Erfindung beträgt die Menge an enthaltenen Silanen B wenigstens 0,7 phf.

Gemäß einer weiteren vorteilhaften Weiterbildung der Erfindung beträgt die Menge an enthaltenen Silanen B wenigstens 1,0 phf.

Gemäß einer weiteren vorteilhaften Weiterbildung der Erfindung beträgt die Menge an enthaltenen Silanen B wenigstens 1,5 phf.

Die bevorzugten Mindestmengen gelten jeweils auch, wenn nur ein Silan des Typs B enthalten ist.

Insbesondere mit den bevorzugten und besonders bevorzugten Mengen und Weiterbildungen bzw. Ausführungsformen ergeben sich sehr gute Eigenschaften hinsichtlich Rollwiderstands- und Handling-Prediktoren.

Die erfindungsgemäß enthaltenen Silane A und/oder B können auf einem Träger, beispielsweise Wachs, Polymer oder Ruß, aufgebracht sein, und in dieser Form der Kautschukmischung zugegeben sein. Die erfindungsgemäß enthaltenen Silane A und/oder B können auf einer Kieselsäure aufgebracht sein, wobei die Anbindung physikalisch oder chemisch erfolgt sein kann.

Hierbei können die Silane A und B getrennt voneinander auf Kieselsäure aufgebracht werden und dann diese Kieselsäuren der Mischung zugegeben werden oder die Silane A und B können gemeinsam auf eine Kieselsäure aufgebracht werden.

Die Aufbringung der erfindungsgemäß enthaltenen Silane A und/oder B auf Kieselsäure verringert z.B. den Ausstoß von flüchtigen Nebenprodukten, wie Ethanol bei der Verwendung von Ethoxy-substituierten Silanen (R¹ = Ethoxy).

Besonders bevorzugt beträgt das Molverhältnis an enthaltenen Silanen A zu enthaltenen Silanen B 20:80 bis 90:10, vorzugsweise 25:75 bis 85:15, besonders bevorzugt 25:75 bis 80:20, ganz besonders bevorzugt 30:70 bis 75:25.

Hierbei beträgt bevorzugt wenigstens die Menge an enthaltenen Silanen A wenigstens 2 phf, besonders bevorzugt wenigstens 2,5 phf, und wenigstens die Menge an enthaltenen Silanen B wenigstens 0,7 phf, bevorzugt wenigstens 1,0 phf, besonders bevorzugt wenigstens 1,5 phf.

Gemäß einer vorteilhaften Ausführungsform der Erfindung werden das oder die Silane A und das oder die Silane B vor der Zugabe zu der Kautschukmischung miteinander vermischt, und zwar bevorzugt in den genannten Molverhältnissen A zu B.

Hierdurch muss nur einmal Silan zudosiert werden, sodass nur eine Dosierungsform notwendig ist.

Das Vermischen der Silane kann unter Luftausschluss durchgeführt werden. Das Vermischen der Silane kann unter Schutzgasatmosphäre durchgeführt werden, zum Beispiel unter Argon oder Stickstoff, bevorzugt unter Stickstoff.

Das Vermischen der Silane kann bei Normaldruck, erhöhtem Druck oder reduziertem Druck durchgeführt werden. Bevorzugt kann das Vermischen der Silane bei Normaldruck durchgeführt werden. Erhöhter Druck kann ein Druck von 1,1 bar bis 100 bar, bevorzugt von 1,1 bar bis 50 bar, besonders bevorzugt von 1,1 bar bis 10 bar und ganz besonders bevorzugt von 1,1 bis 5 bar, sein. Reduzierter Druck kann ein Druck von 1 mbar bis 1000 mbar, bevorzugt 250 mbar bis 1000 mbar, besonders bevorzugt 500 mbar bis 1000 mbar, sein.

Das Vermischen der Silane kann zwischen 20°C und 100°C, bevorzugt zwischen 20°C und 50°C, besonders bevorzugt zwischen 20°C und 30°C, durchgeführt werden.

Das Vermischen der Silane kann in einem Lösungsmittel, beispielsweise Methanol, Ethanol, Propanol, Butanol, Cyclohexanol, N,N-Dimethylformamid, Dimethylsulfoxid, Pentan, Hexan, Cyclohexan, Heptan, Octan, Dekan, Toluol, Xylol, Aceton, Acetonitril, Tetrachlorkohlenstoff, Chloroform, Dichlormethan, 1,2-Dichlorethan, Tetrachlorethylen, Diethylether, Methyltertbutylether, Methylethylketon, Tetrahydrofuran, Dioxan, Pyridin oder Essigsäuremethylester oder einer Mischung der zuvor genannten Lösungsmittel durchgeführt werden. Das Vermischen der Silane wird bevorzugt ohne Lösungsmittel durchgeführt.

Ferner ist es denkbar, dass die erfindungsgemäße Kautschukmischung wenigstens ein weiteres Silan-Kupplungsagens enthält, welches nicht ein Silan A oder ein Silan B ist. Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Kohlenwasserstoffharze, wie ggf. insbesondere Klebharze
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen
g) Weichmacher.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Der Weichmacher ist besonders bevorzugt ausgewählt aus der Gruppe bestehend aus Kohlenwasserstoffharzen, Flüssig-Polymeren und Mineralölen.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Gemäß einer bevorzugten Ausführungsform der Erfindung enthält die Kautschukmischung wenigstens ein Mineralölweichmacher, bevorzugt wenigstens TDAE und/oder RAE als Weichmacher. Hiermit ergeben sich besonders gute Prozessierbarkeiten, insbesondere eine gute Mischbarkeit der Kautschukmischung.

Gemäß einer bevorzugten Ausführungsform der Erfindung enthält die Kautschukmischung wenigstens ein Flüssig-Polymer als Weichmacher.

Gemäß einer bevorzugten Ausführungsform der Erfindung enthält die Kautschukmischung wenigstens ein Kohlenwasserstoffharz als Weichmacher.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist. Diese Kohlenwasserstoffharze zählen im Rahmen der vorliegenden Erfindung jedoch nicht zu den Kautschuken. Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können. Das Kohlenwasserstoffharz kann ein Homopolymer oder ein Copolymer sein. Unter Homopolymer wird in der vorliegenden Anmeldung ein Polymer verstanden, welches gemäß Römpp Online Version 3.28 "aus Monomeren nur einer Art entstanden ist". Bei den Monomeren kann es sich um alle dem Fachmann bekannten Monomere von Kohlenwasserstoffharzen handeln, wie aliphatische C₅-Monomere, weitere ungesättigte Verbindungen, die kationisch polymerisiert werden können, enthaltend Aromaten und/oder Terpene und/oder Alkene und/oder Cycloalkene.

In einer bevorzugten Ausführungsform der Erfindung ist das Kohlenwasserstoffharz ausgewählt aus der Gruppe bestehend aus aliphatischen C₅-Harzen und Kohlenwasserstoffharzen aus alpha-Methylstyrol und Styrol.

Das Kohlenwasserstoffharz weist bevorzugt einen Erweichungspunkt gemäß ASTM E 28 (Ring und Ball) von 10 bis 180 °C, besonders bevorzugt von 60 bis 150 °C, ganz besonders bevorzugt von 80 bis 99 °C auf. Weiterhin weist das Kohlenwasserstoffharz bevorzugt ein Molekulargewicht Mw von 500 bis 4000 g/mol, bevorzugt von 1300 bis 2500 g/mol auf.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe kann Zinkoxid (ZnO) enthalten sein. Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Die Vulkanisation wird bevorzugt in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können. Schwefel und/oder weitere Schwefelspender sowie ein oder mehrere Beschleuniger werden im letzten Mischungsschritt der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B.

DipDis (Bis-(Diisopropyl)thiophosphoryldisulfid) und/oder Bis(O,O-2-ethylhexylthiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Die benötigte Menge an weiterem Schwefel in Form von elementarem Schwefel und/oder weiterem Schwefelspender richtet sich nach dem Einsatzgebiet der jeweiligen Kautschukmischung. Dem Fachmann sind die jeweiligen Mengen der Zudosierung bekannt. Bei der Zugabe von elementarem Schwefel betragen die Mengen im Fall einer Kautschukmischung für den Wulst von Fahrzeugreifen beispielsweise 0 bis 5 phr. Für Laufstreifen von Fahrzeugreifen, die in der Regel gegenüber dem Wulst einen geringeren Schwefelgehalt aufweisen, beträgt die Menge an zuzugebenden elementaren Schwefel bevorzugt 0 bis 4 phr.

Gemäß einer vorteilhaften Weiterbildung der Erfindung werden mehrere Beschleuniger eingesetzt. Bevorzugt wird ein Sulfenamidbeschleuniger, besonders bevorzugt CBS, in Kombination mit dem Guanidin-Beschleuniger DPG (Diphenylguanidin) eingesetzt. Die Menge an DPG beträgt dabei 0 bis 5 phr, bevorzugt 0,1 bis 3 phr, besonders bevorzugt 0,5 bis 2,5 phr, ganz besonders bevorzugt 1 bis 2,5 phr.

Außerdem können in der Kautschukmischung Vulkanisationsverzögerer vorhanden sein. Die Begriffe "vulkanisiert" und "vernetzt" werden im Rahmen der vorliegenden Erfindung synonym verwendet.

Ein weiterer Gegenstand der vorliegenden Erfindung ist ein Verfahren zur Herstellung der erfindungsgemäßen schwefelvernetzbaren Kautschukmischung, bei dem zunächst in ein oder mehreren Mischstufen eine Grundmischung mit allen Bestandteilen außer dem Vulkanisationssystem hergestellt wird. Durch Zugabe des Vulkanisationssystems in einer letzten Mischstufe wird die Fertigmischung erzeugt. Die Fertigmischung wird z.B. durch einen Extrusionsvorgang oder Kalandrieren weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Gemäß einer vorteilhaften Ausführungsform des erfindungsgemäßen Verfahrens werden das oder die Silane A und das oder die Silane B vor der Zugabe zu der Kautschukmischung miteinander vermischt, und zwar bevorzugt in den genannten Molverhältnissen A zu B und unter den oben genannten Bedingungen inkl. aller beschriebener Ausführungen.

Gemäß einer vorteilhaften Ausführungsformdes erfindungsgemäßen Verfahrens sind die Silane A und/oder B auf einer Kieselsäure aufgebracht, wobei die Anbindung physikalisch oder chemisch erfolgt sein kann, und werden der Kautschukmischung, bevorzugt in einer Grundmischstufe, in dieser Form zugegeben.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit Cap/Base-Konstruktion, wie oben bereits beschrieben.

Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.

Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die sonstigen Bauteile eines Reifen, wie im Wesentlichen Trennplatte, Innenseele (Innenschicht), Kernprofil, Gürtel, Schulter, Gürtelprofil, Karkasse, Wulstverstärker, Wulstprofil, Hornprofil und Bandage. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in den folgenden Tabellen zusammengefasst sind, näher erläutert werden.

Die allgemeine Zusammensetzung der Kautschukmischung, die den Beispielen zugrunde liegt, ist in der Tabelle 1 unter R1 (Rezeptur 1) zusammengefasst. In den Tabellen 2 bis 5 wurden dann sowohl die eingesetzten Silan-Typen als auch die Silan-Mengen variiert, wodurch sich Vergleichsmischungen und erfindungsgemäße Mischungen ergeben. Die Vergleichsmischungen sind mit V, die erfindungsgemäßen Mischungen sind mit E gekennzeichnet. Hierbei gehören die Tabellen 2 und 3 zusammen, wobei in zusammengehörigen Versuchsreihen Silan B zusätzlich zu Silan A zugegeben wurde. In den Tabellen 4 und 5 sind weitere Ausführungsbeispiele aufgeführt, wobei hier in zusammengehörigen Versuchsreihen ausgehend von Vergleichsmischungen ein vollständiger oder teilweiser Austausch von Silan A gegen Silan B vorgenommen wurde. Die jeweiligen Silane wurden in den einzelnen Beispielen zuvor miteinander vermischt und dann der Kautschukmischung in der Grundmischstufe zugegeben. Die Mengenangabe der Silane in phf bezieht sich auf 95 phr Kieselsäure.

### Herstellung von 1-Chlor-6-thiopropyltriethoxysilylhexan

NaOEt (21% in EtOH; 1562 g; 4,820 mol) wurde über 1 h zu Mercaptopropyltriethoxysilan (1233 g; 5,170 mol) dosiert während bei Raumtemperatur gerührt wurde. Nach vollständiger Zugabe wurde die Reaktionsmischung 2 h am Rückfluss erhitzt und anschließend auf Raumtemperatur erkalten gelassen. Das entstandene Intermediat wurde über 30 min zu auf 80 °C erwärmtem 1,6-Dichlorhexan (4828 g; 31,14 mol) dosiert. Nach vollständiger Zugabe wurde das Reaktionsgemisch 3 h am Rückfluss erhitzt bevor es auf Raumtemperatur erkalten gelassen wurde. Die Reaktionsmischung wurde filtriert und der Filterkuchen mit EtOH gespült. Die flüchtigen Bestandteile wurden unter vermindertem Druck entfernt und das Zwischenprodukt l-Chlor-6-thiopropyltriethoxysilylhexan (Ausbeute: 89%, Molverhältnis: 97% 1-Chlor-6-thiopropyltriethoxysilylhexan, 3% Bis(thiopropyltriethoxysilyl)hexan (Silan B-II)); Gew.-%: 95 Gew.-% 1-Chlor-6-thiopropyltriethoxysilylhexan, 5 Gew.-% 1,6-Bis(thiopropyltriethoxysilyl)hexan (Silan B-II)) als farblose bis braune Flüssigkeit erhalten.

### Das Silan ^{f)} wurde folgendermaßen hergestellt:

Na₂CO₃ (59,78 g; 0,564 mol) und eine wässrige Lösung von NaSH (40% in Wasser; 79,04 g; 0,564 mol) wurden mit Wasser (97,52 g) vorgelegt. Dann wurde Tetrabutylphosphoniumbromid (TBPB) (50% in Wasser; 3,190 g; 0,005 mol) zugegeben und Acetylchlorid (40,58 g; 0,517 mol) über 1 h zugetropft wobei die Reaktionstemperatur bei 25-32 °C gehalten wurde. Nach vollständiger Zugabe des Acetylchlorids wurde 1 h bei Raumtemperatur gerührt. Dann wurde TBPB (50% in Wasser; 3,190 g; 0,005 mol) und 1-Chlor-6-thiopropyltriethoxysilylhexan (s. oben; 167,8 g; 0,470 mol) zugegeben und 3-5 h am Rückfluss erhitzt. Der Reaktionsfortschritt wurde mittels Gaschromatographie verfolgt. Als das 1-Chlor-6-thiopropyltriethoxysilylhexan zu >96% abreagiert war wurde Wasser zugegeben bis sich alle Salze gelöst hatten und die Phasen wurden separiert. Die flüchtigen Bestandteile der organischen Phase wurden unter vermindertem Druck entfernt und S-(6-((3-(Triethoxysilyl)propyl)thio)hexyl)thioacetat) (Ausbeute: 90%, Molverhältnis: 97% S-(6-((3-(Triethoxysilyl)propyl)thio)hexyl)thioacetat (Silan A-II), 3% Bis(thiopropyltriethoxysilyl)hexan (Silan B-II); Gew.-%: 96 Gew.-% S-(6-((3-(Triethoxysilyl)propyl)thio)hexyl)thioacetat (Silan A-II), 4 Gew.-% 1,6-Bis(thiopropyltriethoxysilyl)hexan (Silan B-II)) als gelbe bis braune Flüssigkeit erhalten.

### Das Silan ^{g)} wurde folgendermaßen hergestellt:

Na₂CO₃ (220,2 g; 2,077 mol) und eine wässrige Lösung von NaSH (40% in Wasser; 291,2 g, 2,077 mol) wurden mit Wasser (339,2 g) vorgelegt. Dann wurde Tetrabutylammoniumbromid (TBAB) (50% in Wasser; 10,96 g; 0,017 mol) zugegeben und Octanoylchlorid (307,2 g; 1,889 mol) über 2,5 h zugetropft wobei die Reaktionstemperatur bei 24-28 °C gehalten wurde. Nach vollständiger Zugabe des Octanoylchlorids wurde 1 h bei Raumtemperatur gerührt. Dann wurde TBAB (50% in Wasser; 32,88 g; 0,051 mol) und 1-Chlor-6-thiopropyltriethoxysilylhexan (s. oben; 606,9 g; 1,700 mol) zugegeben und 10 h am Rückfluss erhitzt. Dann wurde Wasser zugegeben bis sich alle Salze gelöst hatten und die Phasen wurden separiert. Die flüchtigen Bestandteile der organischen Phase wurden unter vermindertem Druck entfernt und S-(6-((3-(Triethoxysilyl)propyl)thio)hexyl)thiooctanoat (Ausbeute: 95%, Molverhältnis: 97% S-(6-((3-(Triethoxysilyl)propyl)thio)hexyl)thiooctanoat (Silan A-III), 3% Bis(thiopropyltriethoxysilyl)hexan (Silan B-II); Gew.-%: 96 Gew.-% S-(6-((3-(Triethoxysilyl)propyl)thio)hexyl)thiooctanoat, 4 Gew.-% 1,6-Bis(thiopropyltriethoxysilyl)hexan) als gelbe bis braune Flüssigkeit erhalten.

Das Silan ^{h)} wurde aus 1-Chlor-6-thiopropyltriethoxysilylhexan (s. oben) entsprechend des Synthesebeispiels 1 und 3 in JP2012149189 hergestellt. S-(6-((3-(Triethoxysilyl)propyl)thio)hexyl)thiooctadecanoat (Ausbeute: 89%, Molverhältnis: 97% S-(6-((3-(Triethoxysilyl)propyl)thio)hexyl)thiooctadecanoat (Silan A-IV), 3% Bis(thiopropyltriethoxysilyl)hexan (Silan B-II); Gew.-%: 97 Gew.-% S-(6-((3-(Triethoxysilyl)propyl)thio)hexyl)thiooctadecanoat, 3 Gew.-% 1,6-Bis(thiopropyltriethoxysilyl)hexan) wurde als gelbe bis braune Flüssigkeit erhalten.

Das Silan ^{j)} (Silan der Formel B-II): 1,6-Bis(thiopropyltriethoxysilyl)hexan) wurde folgendermaßen hergestellt:
Zu Mercaptopropyltriethoxysilan (62,0 g; 0,260 mol; 2,10 eq) wird Natriumethanolat (21% in EtOH; 82,3 g; 0,254 mol; 2,05 eq) so zu dosiert, dass die Reaktionstemperatur nicht 35 °C übersteigt. Nach vollständiger Zugabe wird 2 h am Rückfluss erhitzt. Dann wird das Reaktionsgemisch zu 1,6-Dichlorhexan (19,2 g; 0,124 mol; 1,00 eq) über 1,5 h bei 80 °C zugegeben. Nach vollständiger Zugabe wird 3 h am Rückfluss erhitzt und anschließend auf Raumtemperatur erkalten gelassen. Ausgefallene Salze werden abfiltriert und das Produkt unter vermindertem Druck vom Lösungsmittel befreit. Das Produkt (Ausbeute: 88%, Reinheit: > 99% im ¹³C-NMR) wurde als klare Flüssigkeit erhalten.

NMR-Methode: Die in den Beispielen als Analysenergebnisse angegebenen Molverhältnisse und Massenanteile stammen aus ¹³C-NMR-Messungen mit den folgenden Kennzahlen: 100.6 MHz, 1000 Scans, Lösungsmittel CDCl₃, interner Standard für die Kalibrierung: Tetramethylsilan, Relaxationshilfsmittel Cr(acac)₃, für die Bestimmung des Massenanteils im Produkt wurde eine definierte Menge Dimethylsulfon als interner Standard zugegeben und aus den Molverhältnissen der Produkte dazu der Massenanteil berechnet.

Die Mischungsherstellung erfolgte ansonsten nach dem in der Kautschukindustrie üblichen Verfahren unter üblichen Bedingungen in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. In der zweiten Stufe wurde die Mischung aus Stufe 1 noch einmal durchmischt, es wurde ein sogenannter Remill durchgeführt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde.

Aus sämtlichen Mischungen wurden Prüfkörper durch Vulkanisation nach t₉₅ bis t₁₀₀ (gemessen am Moving Die Rheometer gemäß ASTM D 5289-12/ ISO 6502) unter Druck bei 160°C bis 170 °C hergestellt und mit diesen Prüfkörpern für die Kautschukindustrie typische Materialeigenschaften mit den im Folgenden angegebenen Testverfahren ermittelt.
- Verlustfaktor tan δ (10%) und Dynamischer Speichermodul G' (100%) aus RPA (**=** *engl.* "rubber process analyzer") in Anlehnung an ASTM D6601 vom zweiten Dehnungsdurchlauf ("strain sweep") bei 1 Hz und 70°C
- Spannungswert bei 300% Dehnung bei Raumtemperatur RT (M300) gemäß DIN 53 504
- Rückprallelastizität bei 70°C gemäß ISO 4662 oder ASTM D 1054
- konditionierte Shore-A-Härte bei Raumtemperatur und 70°C in Anlehnung an DIN ISO 7619-1, zehnfach mit 5 MPa vorkonditioniert und anschließend nach ISO 868 geprüft

### Verwendete Substanzen:

a) Kieselsäure: VN3, Fa. Evonik
b) Sonstige Zusatzstoffe: Alterungsschutzmittel, Ozonschutzwachs, Zinkoxid, Stearinsäure
c) DPG + CBS
d) Silan-Varianten gemäß e) bis j)
e) NXT, Fa. Momentive; enthält zu > 90 Gew.-% das Silan A^{∗}) (EtO)₃Si-(CH₂)₃-S-C(=O)-(CH₂)₆-CH₃: anbindend, aber nicht erfindungsgemäß unter Formel A-I)
f) Enthält 97 Mol-% Silan der Formel A-II), 3 Mol-% Silan B-II): Herstellung s. oben
g) Enthält 97 Mol-% Silan der Formel A-III), 3 Mol-% Silan B-II): Herstellung s. oben
h) Enthält 97 Mol-% Silan der Formel A-IV), 3 Mol-% Silan B-II): Herstellung s. oben
i) Silan B^{∗}: Bistriethoxysilyloctan der Firma ABCR GmbH; nicht anbindend, aber nicht erfindungsgemäß unter Formel B-I),
j) Silan der Formel B-II) (EtO)₃Si-(CH₂)₃-S-(CH₂)₆-S-(CH₂)₃-Si(OEt)₃ (1,6-Bis(thiopropyltriethoxysilyl)hexan), Reinheit > 99 %, s. oben
k) Mol-Anteil in Mol-% des nicht-anbindenden Silans B-II) am Silan-Gemisch: berechnet aus den zugegebenen Silanen ^{f), g)} und ^{h)} (d. h. unter Berücksichtigung der geringen Mol-% Silan B-II) in Silan ^{f), g)} und ^{h)})
l) Mol-Anteil in Mol-% des nicht-anbindenden Silans Typ B^{∗} am Silan-Gemisch
m) Polybutadien: Europrene Neocis BR 40, Fa. Polimeri
n) Sprintan^{®} SLR-4601, Fa. Trinseo

**Tabelle 1**

| **Bestandteile** | **Einheit** | **R1** |
|---|---|---|
| NR TSR | phr | 10 |
| BR ^{m)} | phr | 18 |
| SSBR ⁿ⁾ | phr | 72 |
| Kieselsäure ^{a)} | phr | 95 |
| TDAE | phr | 50 |
| Sonstige Zusatzstoffe ^{b)} | phr | 9 |
| Silan - variiert ^{d)} | phf | variiert |
| Beschleuniger ^{c)} | phr | 4 |
| Schwefel | phr | 2 |

**Tabelle 2**

| | **Einh.** | **V1** | **V2** | **V3** | **E1** | **E2** | **E3** |
|---|---|---|---|---|---|---|---|
| Silan ^{e)} | phf | 7,2 | 7,2 | 7,2 | - | - | - |
| Silan ^{g)} | phf | - | - | - | 7,2 | 7,2 | 7,2 |
| Silan ⁱ⁾ | phf | 1,7 | 2,6 | 3,5 | - | - | - |
| Silan ^{j)} | phf | - | - | - | 1,7 | 2,5 | 3,3 |
| Mol-% B-II) ^{k)} | | - | - | - | 20 | 26 | 31 |
| Mol-% B^{∗ 1)} | | 17 | 23 | 29 | - | - | - |
| | | | | | | | |
| G' (100%) | kPa | 427 | 400 | 422 | 580 | 610 | 641 |
| M300 RT | MPa | 2,6 | 2,5 | 2,6 | 5,1 | 5,3 | 5,4 |
| Rückpr. 70 °C | % | 38,6 | 38,4 | 39,2 | 45,9 | 47,2 | 47,3 |

**Tabelle 3**

| | **Einh.** | **E4** | **E5** | **E6** | **E7** | **E8** | **E9** |
|---|---|---|---|---|---|---|---|
| Silan ^{h)} | phf | 7,2 | 7,2 | 7,2 | - | - | - |
| Silan ^{f)} | phf | - | - | - | 7,2 | 7,2 | - |
| Silan ^{j)} | phf | 1,3 | 1,95 | 2,6 | 2,0 | 3,0 | 7,2 |
| Mol-% B-II) ^{k)} | | 18 | 26 | 31 | 19 | 25 | 100 |
| | | | | | | | |
| G' (100%) | kPa | 576 | 636 | 623 | 691 | 736 | 555 |
| M300 RT | MPa | 4,3 | 3,8 | 4,0 | 4,1 | 4,6 | 3,2 |
| Rückpr. 70 °C | % | 43,6 | 41,1 | 43,1 | 42,8 | 44,4 | 39,6 |

**Tabelle 4**

| | **Einh.** | **V4** | **V5** | **V6** | **V7** | **E10** | **E11** | **E12** |
|---|---|---|---|---|---|---|---|---|
| Silan ^{e)} | phf | 11,1 | 6,6 | 4,4 | 2,2 | - | - | - |
| Silan ^{g)} | phf | - | - | - | - | 8,7 | 5,8 | 2,9 |
| Silan ⁱ⁾ | phf | - | 2,7 | 4,0 | 5,3 | - | - | - |
| Silan ^{j)} | phf | - | - | - | - | 3,4 | 5,1 | 6,8 |
| Mol-% B-II ^{k)} | | - | - | - | - | 29 | 46 | 68 |
| Mol-% B^{∗ 1)} | | - | 25 | 43 | 67 | - | - | - |
| | | | | | | | | |
| Kond. Härte RT | Shore A | 49,0 | 48,6 | 46,7 | 48,0 | 55,7 | 56,2 | 56,0 |
| Kond. Härte 70 °C | Shore A | 45,7 | 46,0 | 43,6 | 44,6 | 53,7 | 54,1 | 54,1 |
| Tan d (10%) | | 0,205 | 0,214 | 0,221 | 0,223 | 0,167 | 0,178 | 0,184 |

**Tabelle 5**

| | **Einh.** | **E13** | **E14** | **E15** | **E16** | **E17** | **E18** | **E19** | **V8** |
|---|---|---|---|---|---|---|---|---|---|
| Silan ^{h)} | phf | 11,3 | 7,5 | 3,8 | - | - | - | - | - |
| Silan ^{f)} | phf | - | - | - | 9,6 | 7,2 | 4,8 | 2,4 | - |
| Silan ^{j)} | phf | 3,4 | 5,1 | 6,8 | 1,7 | 3,4 | 5,1 | 6,8 | 8,5 |
| Mol-% B-II) ^{k)} | | 29 | 45 | 68 | 14 | 27 | 45 | 68 | 100 |
| | | | | | | | | | |
| Kond. Härte RT | Shore A | - | 53,6 | 54,4 | 59,0 | 59,6 | 58,6 | 58,3 | 52,8 |
| Kond. Härte 70 °C | Shore A | - | 51,2 | 52,2 | 56,4 | 56,8 | 56,0 | 55,6 | 49,8 |
| Tan d (10 %) | | 0,161 | 0,171 | 0,186 | 0,158 | 0,162 | 0,16 | 0,162 | 0,192 |

Wie an den Tabellen erkennbar, weisen die erfindungsgemäßen Kautschukmischungen im Vergleich zum Stand der Technik (Vergleichsmischungen V1 bis V7 gemäß WO 2012092062) höhere Werte für Härte und Steifigkeit (G' und M300) auf. Gleichzeitig weisen sie überraschenderweise verbesserte Rollwiderstandsindikatoren auf, wie an dem geringeren Hystereseverlust Tangens Delta und der höheren Rückprallelastizität bei 70 °C erkennbar.

Das erfindungsgemäße Vulkanisat und der erfindungsgemäßen Fahrzeugreifen zeichnen sich somit durch ein optimiertes Handling- und Rollwiderstandsverhalten aus.

## Patentansprüche

1. Schwefelvernetzbare Kautschukmischung enthaltend wenigstens folgende Bestandteile:
- wenigstens einen Dienkautschuk; und
- 10 bis 300 phr wenigstens einer Kieselsäure ; und
- 1 bis 30 phf wenigstens eines Silans A mit der allgemeinen Summenformel A-I)
A-I) (R¹)ₒSi-R²-(S-R³)_{q}-S-X; und
- 0,5 bis 30 phf wenigstens eines Silans B mit der allgemeinen Summenformel B-I)
B-I) (R¹)ₒSi-R²-(S-R³)ᵤ-S-R²-Si(R¹)ₒ
wobei o gleich 1, 2 oder 3 sein kann und die Reste R¹ gleich oder verschieden voneinander sein können und ausgewählt sind aus C₁-C₁₀-Alkoxygruppen, C₆-C₂₀-Phenoxygruppen, C₂-C₁₀-cyclischen Dialkoxygruppen, C₂-C₁₀- Dialkoxygruppen, C₄-C₁₀- Cycloalkoxygruppen, C₆-C₂₀- Arylgruppen, C₁-C₁₀-Alkylgruppen, C₂-C₂₀- Alkenylgruppen, C₂-C₂₀- Alkinylgruppen, C₇-C₂₀- Aralkylgruppen, Halogeniden oder
Alkylpolyethergruppe ―O-(R⁶-O)ᵣ-R⁷, wobei die Reste R⁶ gleich oder verschieden sind und verzweigte oder unverzweigte, gesättigte oder ungesättigte, aliphatische, aromatische oder gemischt aliphatische/aromatische zweibindige C₁-C₃₀-Kohlenwasserstoffgruppe sind, r eine ganze Zahl von 1 bis 30 ist und die Reste R⁷ unsubstituierte oder substituierte, verzweigte oder unverzweigte einbindige Alkyl-, Alkenyl-, Aryl- oder Aralkylgruppen sind, oder
zwei R¹ entsprechen einer Dialkoxygruppe mit 2 bis 10 Kohlenstoffatomen wobei dann o < 3 ist,
oder es können zwei oder mehr Silane gemäß den Formeln A-I) und/oder B-I) über Reste R¹ oder durch Kondensation verbrückt sein; und
wobei die Bedingung gilt, dass in den Formeln A-I) und B-I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist; und
wobei die Reste R² und R³ in jedem Molekül und innerhalb eines Moleküls gleich oder verschieden sein können und verzweigte oder unverzweigte, gesättigte oder ungesättigte, aliphatische, aromatische oder gemischt aliphatische/aromatische zweibindige C₁-C₃₀-Kohlenwasserstoffgruppen sind; und wobei q gleich 1 oder 2 oder 3 ist; und u gleich 1 oder 2 oder 3 ist; und X ein Wasserstoffatom oder eine ―C(=O)-R⁸ Gruppe ist wobei R⁸ ausgewählt ist aus Wasserstoff, C₁-C₂₀ Alkylgruppen, C₆-C₂₀-Arylgruppen, C₂-C₂₀-Alkenylgruppen und C₇-C₂₀-Aralkylgruppen.

2. Schwefelvernetzbare Kautschukmischung nach Anspruch 1, **dadurch gekennzeichnet, dass** q gleich 1 ist.

3. Schwefelvernetzbare Kautschukmischung nach einem der vorherigen Ansprüche, **dadurch gekennzeichnet, dass** u gleich 1 ist.

4. Schwefelvernetzbare Kautschukmischung nach einem der vorherigen Ansprüche, **dadurch gekennzeichnet, dass** R² eine Alkylgruppe mit 2 oder 3 Kohlenstoffatomen ist.

5. Schwefelvernetzbare Kautschukmischung nach einem der vorherigen Ansprüche, **dadurch gekennzeichnet, dass** R³ eine Alkylgruppe mit 4 bis 8 Kohlenstoffatomen ist.

6. Schwefelvernetzbare Kautschukmischung nach einem der vorherigen Ansprüche, **dadurch gekennzeichnet, dass** X eine Alkanoylgruppe, ist.

7. Schwefelvernetzbare Kautschukmischung nach einem der Ansprüche 1 bis 6, **dadurch gekennzeichnet, dass** das Silan A die folgende Struktur gemäß Formel A-II) hat:
A-II) (EtO)₃Si-(CH₂)₃-S-(CH₂)₆-S-C(=O)-CH₃ .

8. Schwefelvernetzbare Kautschukmischung nach einem der Ansprüche 1 bis 6, **dadurch gekennzeichnet, dass** das Silan A die folgende Struktur gemäß Formel A-III) hat:
A-III) (EtO)₃Si-(CH₂)₃-S-(CH₂)₆-S-C(=O)-(CH₂)₆-CH₃.

9. Schwefelvernetzbare Kautschukmischung nach Anspruch 1, **dadurch gekennzeichnet, dass** das Silan A die folgende Struktur gemäß Formel A-IV) hat:
A-IV) (EtO)₃Si-(CH₂)₃-S-(CH₂)₆-S-C(=O)-(CH₂)₁₆-CH₃.

10. Schwefelvernetzbare Kautschukmischung nach einem der vorherigen Ansprüche, **dadurch gekennzeichnet, dass** das Silan B die folgende Struktur gemäß Formel B-II) hat:

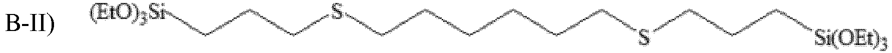

11. Schwefelvernetzbare Kautschukmischung nach einem der vorherigen Ansprüche, **dadurch gekennzeichnet, dass** das Molverhältnis an enthaltenen Silanen A zu enthaltenen Silanen B 20:80 bis 90:10 beträgt.

12. Schwefelvernetzbare Kautschukmischung nach einem der vorherigen Ansprüche, **dadurch gekennzeichnet, dass** der Dienkautschuk ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

13. Vulkanisat, welches durch Schwefelvulkanisation wenigstens einer Kautschukmischung nach einem der Ansprüche 1 bis 12 erhalten ist.

14. Fahrzeugreifen, **dadurch gekennzeichnet, dass** er in wenigstens einem Bauteil wenigstens ein Vulkanisat nach Anspruch 13 aufweist.

15. Fahrzeugreifen nach Anspruch 14, **dadurch gekennzeichnet, dass** er wenigstens ein Vulkanisat nach Anspruch 13 wenigstens im Laufstreifen aufweist.

## Claims

1. Sulfur-crosslinkable rubber mixture containing at least the following constituents:
- at least one diene rubber; and
- 10 to 300 phr of at least one silica; and
- 1 to 30 phf of at least one silane A having general empirical formula A-I)
A-I) (R¹)ₒSi-R²-(S-R³)_{q}-S-X; and
- 0.5 to 30 phf of at least one silane B having general empirical formula B-I)
β-I) (R¹)ₒSi-R²-(s-R³)ᵤ-S-R²-Si(R¹)ₒ
wherein o may be 1, 2 or 3 and the radicals R¹ may be identical or different and are selected from C₁-C₁₀-alkoxy groups,
C₆-C₂₀-phenoxy groups, C₂-C₁₀-cyclic dialkoxy groups, C₂-C₁₀-dialkoxy groups, C₄-C₁₀-cycloalkoxy groups, C₆-C₂₀-aryl groups,
C₁-C₁₀-alkyl groups, C₂-C₂₀-alkenyl groups, C₂-C₂₀-alkynyl groups,
C₇-C₂₀-aralkyl groups, halides or
alkyl polyether group -O-(R⁶-O)ᵣ-R⁷, wherein the radicals R⁶ are identical or different and are branched or unbranched, saturated or unsaturated, aliphatic, aromatic or mixed aliphatic/aromatic divalent C₁-C₃₀-hydrocarbon group, r is an integer from 1 to 30, and the radicals R⁷ are unsubstituted or substituted, branched or unbranched monovalent alkyl, alkenyl, aryl or aralkyl groups, or
two R¹ correspond to a dialkoxy group having 2 to 10 carbon atoms wherein in that case o < 3,
or two or more silanes of formulae A-I) and/or B-I) may be bridged via radicals R¹ or by condensation; and
with the proviso that in the formulae A-I) and B-I) in each (R¹)ₒSi group at least one R¹ is selected from the abovementioned options where this R¹ i) is bonded to the silicon atom via an oxygen atom or ii) is a halide; and wherein the radicals R² and R³ in each molecule and within a molecule may be identical or different and are branched or unbranched, saturated or unsaturated, aliphatic, aromatic or mixed aliphatic/aromatic divalent C₁-C₃₀-hydrocarbon groups; and wherein
q is 1 or 2 or 3; and u is 1 or 2 or 3; and X is a hydrogen atom or a ―C(=O)-R⁸ group wherein R⁸ is selected from hydrogen, C₁-C₂₀-alkyl groups, C₆-C₂₀-aryl groups, C₂-C₂₀-alkenyl groups and C₇-C₂₀-aralkyl groups.

2. Sulfur-crosslinkable rubber mixture according to Claim 1, **characterized in that** q is 1.

3. Sulfur-crosslinkable rubber mixture according to either of the preceding claims, **characterized in that** u is 1.

4. Sulfur-crosslinkable rubber mixture according to any of the preceding claims, **characterized in that** R² is an alkyl group having 2 or 3 carbon atoms.

5. Sulfur-crosslinkable rubber mixture according to any of the preceding claims, **characterized in that** R³ is an alkyl group having 4 to 8 carbon atoms.

6. Sulfur-crosslinkable rubber mixture according to any of the preceding claims, **characterized in that** X is an alkanoyl group.

7. Sulfur-crosslinkable rubber mixture according to any of Claims 1 to 6, **characterized in that** the silane A has the following structure conforming to formula A-II):
A-II) (EtO) ₃Si-(CH₂)₃-S-(CH₂)₆-S-C(=O)-CH₃.

8. Sulfur-crosslinkable rubber mixture according to any of Claims 1 to 6, **characterized in that** the silane A has the following structure conforming to formula A-III):
A-III) (EtO)₃Si-(CH₂)₃-S-(CH₂)₆-S-C(=O)-(CH₂)₆-CH₃.

9. Sulfur-crosslinkable rubber mixture according to Claim 1, **characterized in that** the silane A has the following structure conforming to formula A-IV):
A-IV) (EtO)₃Si-(CH₂)₃-S-(CH₂)₆-S-C(=O)-(CH₂)₁₆-CH₃.

10. Sulfur-crosslinkable rubber mixture according to any of the preceding claims, **characterized in that** the silane B has the following structure conforming to formula B-II):

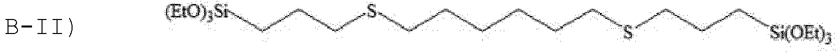

11. Sulfur-crosslinkable rubber mixture according to any of the preceding claims, **characterized in that** the molar ratio of silanes A present to silanes B present is 20:80 to 90:10.

12. Sulfur-crosslinkable rubber mixture according to any of the preceding claims, **characterized in that** the diene rubber is selected from the group consisting of natural polyisoprene (NR), synthetic polyisoprene (IR), butadiene rubber (BR), solution-polymerized styrene-butadiene rubber (SSBR) and emulsion-polymerized styrene-butadiene rubber (ESBR).

13. Vulcanizate obtained by sulfur vulcanization of at least one rubber mixture according to any of Claims 1 to 12.

14. Vehicle tyre, **characterized in that** it comprises in at least one component part at least one vulcanizate according to Claim 13.

15. Vehicle tyre according to Claim 14, **characterized in that** it comprises at least one vulcanizate according to Claim 13, at least in the tread.

## Revendications

1. Mélange de caoutchouc réticulable par le soufre contenant au moins les constituants suivants :
- au moins un caoutchouc diénique ; et
- 10 à 300 pcc (parties par cent parties de caoutchouc) de caoutchouc d'au moins une silice ; et
- 1 à 30 phf (parties par cent parties de charge) d'au moins un silane A présentant la formule brute générale A-I)
**A-I)** **(R¹)ₒSi-R²-(S-R³)_{q}-S-X;**
et
- 0,5 à 30 phf d'au moins un silane B présentant la formule brute générale B-I)
**B-I)** **(R¹)ₒSi-R²-(S-R³)ᵤ-S-R²-Si(R¹)ₒ**
dans lesquelles o peut valoir 1, 2 ou 3 et les radicaux R¹ peuvent être identiques ou différents les uns des autres et sont choisis parmi les groupes C₁-C₁₀-alcoxy, C₆-C₂₀-phénoxy, C₂-C₁₀-dialcoxy cyclique, C₂-C₁₀-dialcoxy, C₄-C₁₀-cycloalcoxy, C₆-C₂₀-aryle, C₁-C₁₀-alkyle, C₂-C₂₀-alcényle, C₂-C₂₀-alcynyle, C₇-C₂₀-aralkyle, les halogénures ou le groupe alkylpolyéther -O-(R⁶-O)ᵣ-R⁷, les radicaux R⁶ étant identiques ou différents et représentant des groupes hydrocarbonés en C₁-C₃₀ ramifiés ou non ramifiés, saturés ou insaturés, aliphatiques, aromatiques ou aliphatiques/aromatiques mixtes, bivalents, r représentant un nombre entier de 1 à 30 et les radicaux R⁷ représentant des groupes alkyle, alcényle, aryle ou aralkyle non substitués ou substitués, ramifiés ou non ramifiés, monovalents, ou
deux radicaux R¹ correspondent à un groupe dialcoxy comprenant 2 à 10 atomes de carbone, o étant alors < 3, ou deux silanes ou plus selon les formules A-I) et/ou B-I) peuvent être pontés via des radicaux R¹ ou par condensation ; et
la condition suivante s'appliquant : dans les formules A-I) et B-I), dans chaque groupe (R¹)ₒSi, au moins un R¹ est choisi parmi les possibilités susmentionnées dans lesquelles cet R¹ i) est lié via un atome d'oxygène à l'atome de silicium ou ii) représente un halogénure ; et les radicaux R² et R³ dans chaque molécule et au sein d'une molécule peuvent être identiques ou différents et représentent des groupes hydrocarbonés en C₁-C₃₀ ramifiés ou non ramifiés, saturés ou insaturés, aliphatiques, aromatiques ou aliphatiques/aromatiques mixtes, bivalents ; et
q valant 1 ou 2 ou 3 ; et u valant 1 ou 2 ou 3 ;
et X représente un atome d'hydrogène ou un groupe -C(=O)-R⁸, R⁸ étant choisi parmi hydrogène, les groupes C₁-C₂₀-alkyle, les groupes C₆-C₂₀-aryle, les groupes C₂-C₂₀-alcényle et les groupes C₇-C₂₀-aralkyle.

2. Mélange de caoutchouc réticulable par le soufre selon la revendication 1, **caractérisé en ce que** q vaut 1.

3. Mélange de caoutchouc réticulable par le soufre selon l'une quelconque des revendications précédentes, **caractérisé en ce que** u vaut 1.

4. Mélange de caoutchouc réticulable par le soufre selon l'une quelconque des revendications précédentes, **caractérisé en ce que** R² représente un groupe alkyle comprenant 2 ou 3 atomes de carbone.

5. Mélange de caoutchouc réticulable par le soufre selon l'une quelconque des revendications précédentes, **caractérisé en ce que** R³ représente un groupe alkyle comprenant 4 à 8 atomes de carbone.

6. Mélange de caoutchouc réticulable par le soufre selon l'une quelconque des revendications précédentes, **caractérisé en ce que** X représente un groupe alcanoyle.

7. Mélange de caoutchouc réticulable par le soufre selon l'une quelconque des revendications 1 à 6, **caractérisé en ce que** le silane A présente la structure suivante selon la formule A-II) :
**A-II)** **(EtO)₃Si-(CH₂)₃-S-(CH₂)₆-S-C(=O)-CH₃.**

8. Mélange de caoutchouc réticulable par le soufre selon l'une quelconque des revendications 1 à 6, **caractérisé en ce que** le silane A présente la structure suivante selon la formule A-III) :
**A-III)** **(EtO)₃Si-(CH₂)₃-S-(CH₂)₆-S-C(=O)-(CH₂)₆-CH₃**

9. Mélange de caoutchouc réticulable par le soufre selon la revendication 1, **caractérisé en ce que** le silane A présente la structure suivante selon la formule A-IV) :
**A-IV)** **(EtO)₃Si-(CH₂)₃-S-(CH₂)₆-S-C(=O)-(CH₂)₁₆-CH₃**

10. Mélange de caoutchouc réticulable par le soufre selon l'une quelconque des revendications précédentes, **caractérisé en ce que** le silane B présente la structure suivante selon la formule B-II) :

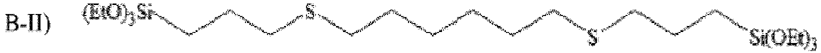

11. Mélange de caoutchouc réticulable par le soufre selon l'une quelconque des revendications précédentes, **caractérisé en ce que** le rapport molaire des silanes A contenus aux silanes B contenus est de 20:80 à 90:10.

12. Mélange de caoutchouc réticulable par le soufre selon l'une quelconque des revendications précédentes, **caractérisé en ce que** le caoutchouc diénique est choisi dans le groupe constitué par le polyisoprène naturel (NR), le polyisoprène synthétique (IR), le caoutchouc de butadiène (BR), le caoutchouc de styrène-butadiène polymérisé en solution (SSBR) et le caoutchouc de styrène-butadiène polymérisé en émulsion (ESBR).

13. Produit de vulcanisation qui est obtenu par vulcanisation par le soufre d'au moins un mélange de caoutchouc selon l'une quelconque des revendications 1 à 12.

14. Pneumatique pour véhicule, **caractérisé**
**en ce qu'**il présente dans au moins un élément au moins un produit de vulcanisation selon la revendication 13.

15. Pneumatique pour véhicule selon la revendication 14, **caractérisé**
**en ce qu'**il présente au moins un produit de vulcanisation selon la revendication 13 au moins dans la bande de roulement.
